# FASCICULE DE BREVET EUROPEEN

(11) **EP 1 431 152 B1**
(45) Date de publication et mention de la délivrance du brevet: **01.12.2010**
(21) Numéro de dépôt: 03028932.6
(22) Date de dépôt: 17.12.2003
(51) Int. Cl.: B60T 13/569, B60T 13/575

(54) **Servomoteur d'assistance pneumatique au freinage, en particulier pour vehicule automobile**
Pneumatischer Bremskraftverstärker, insbesondere für Kraftfahrzeuge
Pneumatic brake booster, in particular for automobiles

(30) Priorité: 20.12.2002 FR 0216464
(43) Date de publication de la demande: 23.06.2004
(73) Titulaire: BOSCH SISTEMAS DE FRENADO, S.L., 08080 Barcelone 6 (ES)
(72) Inventeur: Simon Bacardit, Juan, 08013 Barcelone (ES)
(74) Mandataire: Hurwic, Aleksander Wiktor

(56) Documents cités:
- DE-A- 19 831 961
- DE-A- 19 831 962
- FR-A- 2 825 058
- US-A1- 2002 129 697
- US-B1- 6 467 390

## Description

L'invention concerne un servomoteur pneumatique d'assistance au freinage, en particulier pour véhicule automobile.

Un tel servomoteur comprend une enveloppe rigide dans laquelle deux chambres sont délimitées et séparées l'une de l'autre par une cloison transversale mobile qui porte un piston axial sur lequel agit un plongeur monté au bout d'une tige de commande actionnée par une pédale de frein, et qui agit lui-même par une tige de poussée sur un piston d'un maître-cylindre de frein. Une chambre avant du servomoteur est reliée à une source de dépression et la chambre arrière est reliée sélectivement soit à la chambre avant, soit à l'atmosphère environnante.

L'extrémité arrière du plongeur coopère avec un clapet annulaire d'une valve 3 voies, qui est montée à l'extrémité arrière du servomoteur autour de la tige de commande et qui permet de faire communiquer les deux chambres du servomoteur en position de repos, c'est-à-dire en l'absence de freinage, et de les isoler l'une de l'autre puis de relier la chambre arrière à l'atmosphère environnante lors d'un freinage.

La pression atmosphérique admise dans la chambre arrière agit sur le piston et le déplace vers l'avant en amplifiant l'effort qui est appliqué par le conducteur à la pédale de frein et transmis par la tige de commande.

Lors d'un freinage normal, la tige de commande et le piston du servomoteur sont déplacés à la même vitesse. En position avant de la tige de commande, le plongeur qu'elle porte est appliqué sur un disque de réaction en matériau incompressible, tel que du caoutchouc ou un élastomère, monté dans une cuvette à l'extrémité arrière de la tige de poussée. L'effort résistant du circuit de freinage est ainsi retransmis par le plongeur et la tige de commande à la pédale de frein, ce qui aide le conducteur à moduler l'effort qu'il applique à la pédale de frein en fonction des conditions de freinage désirées du véhicule.

Lors d'un freinage d'urgence, la tige de commande et le plongeur sont déplacés vers l'avant plus vite que le piston du servomoteur, et le retour d'effort qui est transmis à la pédale de frein peut être important alors même que le servomoteur n'a pas encore fourni une assistance maximale. Cela peut amener le conducteur à relâcher prématurément l'effort qu'il exerce sur la pédale de frein, même s'il est nécessaire à ce moment-là que l'effort de freinage reste à un maximum.

On a déjà proposé d'équiper ces servomoteurs de moyens d'aide au freinage d'urgence qui permettent, lorsque la tige de commande a été déplacée dans une position extrême avant ou au voisinage immédiat de cette position extrême avant, de réduire plus ou moins fortement la réaction du circuit de freinage sur la tige de commande quand le conducteur relâche partiellement l'effort appliqué à la pédale. Si le conducteur doit ré-appuyer ensuite fortement sur la pédale, ce qui est un cas fréquent en pratique, il peut ramener plus facilement la tige de commande en position extrême avant pour un effort de freinage maximum.

Ces moyens d'aide au freinage d'urgence comprennent en général un palpeur monté coulissant à l'extrémité avant du plongeur et associé à des moyens d'immobilisation axiale par rapport au piston du servomoteur, ce qui permet, lorsque la tige de commande a été amenée dans une position extrême avant et que le conducteur relâche partiellement l'effort exercé sur la pédale de frein, de faire supporter une partie au moins de la réaction du circuit de freinage par le piston sans la transmettre au plongeur et à la tige de commande.

Le document DE 198 31 961 A montre un servomoteur d'assistance d'après le préambule de la revendication 1.

L'invention a notamment pour but de perfectionner ces moyens d'aide au freinage d'urgence de telle sorte que l'assistance fournie par le servomoteur dans le cas précité où le conducteur relâche partiellement l'effort appliqué à la pédale de frein puis ré-applique une effort important à cette pédale, augmente et soit fonction de la vitesse de déplacement de la tige de commande dans la phase précédente du freinage au cours de laquelle la tige de commande a été déplacée dans sa position extrême avant ou au voisinage immédiat de celle-ci.

L'invention propose, à cet effet, un servomoteur d'assistance pneumatique au freinage, en particulier pour véhicule automobile, avec les caractéristiques de la revendication 1.

Grâce au blocage du palpeur sur le plongeur au repos et lors d'un freinage normal et au déblocage permettant le coulissement du plongeur sur le palpeur lors d'un freinage d'urgence, la réduction de la longueur totale de l'ensemble du plongeur et du palpeur dépend de la vitesse de déplacement de la tige de commande et du plongeur lors du freinage d'urgence. Cette réduction de la longueur totale de l'ensemble du plongeur et du palpeur se traduit par une augmentation de la phase de saut bien connue de l'homme du métier et donc par une augmentation de l'assistance fournie par le servomoteur.

Selon d'autres caractéristiques de l'invention :
- les extrémités de la goupille sont reçues dans des lumières oblongues d'une partie cylindrique du piston, ces lumières délimitant un déplacement axial maximal du palpeur par rapport au piston,
- la goupille traverse au moins une lumière oblongue formée dans le plongeur et définissant une position de repos du plongeur par rapport au piston du servomoteur.

Dans une première forme de réalisation de l'invention, le palpeur est reçu et guidé en coulissement axial dans un passage axial cylindrique de l'extrémité du plongeur opposée à la tige de commande, et le plongeur est guidé lui-même dans un passage cylindrique axial du piston comportant, du côté de la tige de poussée, une paroi radiale formée avec un orifice axial de passage du plongeur.

Dans ce mode de réalisation, les moyens d'immobilisation du palpeur comprennent une clé basculante montée dans un logement transversal du piston et comportant un orifice traversé avec jeu par le palpeur, et des moyens de rappel élastiques sollicitant constamment la clé en appui sur le plongeur.

Cette clé est déplaçable par le plongeur, lors d'un freinage d'urgence, entre une position de blocage du palpeur et une position d'appui sur le piston du servomoteur dans laquelle la clé libère le palpeur et permet un coulissement du plongeur sur le palpeur dans la direction de la tige de poussée, pour une réduction de la longueur totale de l'ensemble plongeur-palpeur.

Dans un autre mode de réalisation de l'invention dans lequel la longueur totale de l'ensemble plongeur-palpeur est allongée plus ou moins lors d'un freinage d'urgence, le plongeur est reçu et guidé en coulissement dans un passage axial du palpeur, qui est lui-même reçu et guidé en coulissement dans un passage axial du piston du servomoteur.

Dans ce mode de réalisation, les moyens d'immobilisation comprennent des moyens à rampe ou à coin montés entre une surface cylindrique du plongeur et une surface tronconique interne du palpeur.

Avantageusement, ces moyens d'immobilisation sont formés par une pluralité de rouleaux coniques qui sont répartis en couronne autour de la surface cylindrique du plongeur et qui sont retenus axialement par deux bagues ou rondelles enfilées sur le plongeur.

Ces moyens d'immobilisation sont sollicités axialement en direction de la tige de poussée par des moyens de rappel élastiques prenant appui sur un épaulement du plongeur, et sont appliqués sur une goupille engagée dans des lumières transversales du plongeur, du palpeur et du piston.

La goupille définit une position de repos du plongeur et du palpeur quand elle est appliquée sur une extrémité des lumières du piston du côté de la tige de commande.

Le palpeur est lui-même sollicité axialement par des moyens de rappel élastiques dans une direction opposée à la tige de poussée.

L'invention sera mieux comprise et d'autres caractéristiques, détails et avantages de celle-ci apparaîtront plus clairement à la lumière de la description qui suit, faite à titre d'exemple en référence aux dessins annexés dans lesquels :
- la figure 1 est une vue schématique en coupe axiale d'un servomoteur selon l'invention ;
- les figures 2 et 3 sont des vues schématiques à plus grande échelle en coupe axiale dans deux plans perpendiculaires et représentent le piston du servomoteur de la figure 1 ;
- la figure 4 est un graphe représentant la courbe de variation de la pression de sortie du maître-cylindre en fonction de l'effort d'entrée appliqué à la pédale ;
- les figures 5 et 6 sont des vues correspondant aux figures 2 et 3 respectivement et représentent une variante de réalisation de l'invention ;
- la figure 7 est une vue schématique en perspective, à plus grande échelle, des moyens d'immobilisation représentés aux figures 5 et 6.

Dans la description qui suit, par convention, ce qui se trouve à gauche sur les dessins sera décrit comme étant à l'avant, et ce qui se trouve à droite sera décrit comme étant à l'arrière.

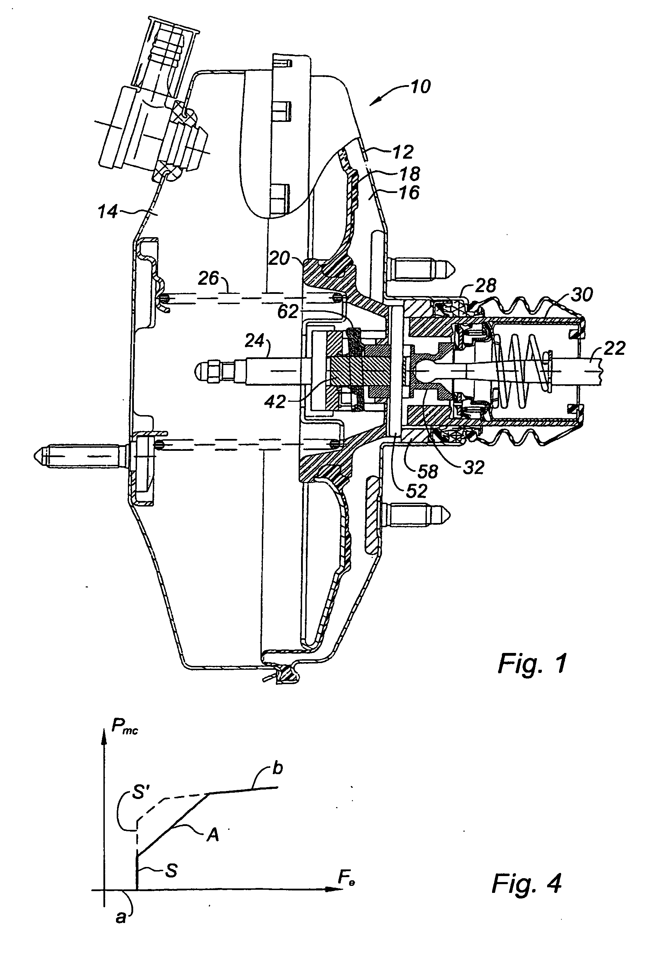

On se réfère d'abord aux figures 1 à 4 pour décrire un premier mode de réalisation de l'invention et son fonctionnement.

Le servomoteur 10 de la figure 1 comprend essentiellement une enveloppe rigide 12 dans laquelle une chambre avant 14 et une chambre arrière 16 sont séparées l'une de l'autre par une cloison transversale mobile 18 qui porte un piston axial 20. La chambre avant 14 est destinée à être reliée à une source de dépression, tandis que la chambre arrière 16 est sélectivement mise en communication avec la chambre avant 14 en l'absence de freinage ou avec l'atmosphère environnante lors d'un freinage.

Le piston axial 20 du servomoteur est interposé entre une tige de commande 22 actionnée par une pédale de frein (non représentée) et une tige de poussée 24 qui agit sur un piston d'un maître-cylindre de frein (non représenté) à son extrémité avant. Un ressort de rappel 26 monté dans la chambre avant 14 sollicite constamment le piston 20 dans sa position arrière de repos représentée en figure 1.

La partie arrière de l'enveloppe 12 forme une cheminée axiale 28 dans laquelle est logée une partie cylindrique tubulaire arrière 30 du piston 20. La tige de commande 22 s'étend axialement dans cette partie tubulaire 30 et porte à son extrémité avant un plongeur 32 guidé en coulissement dans un passage axial 34 du piston 20. La partie arrière annulaire 36 du plongeur 32 coopère avec un clapet annulaire 38 d'une valve à 3 voies qui permet sélectivement, en fonction de la position axiale de la tige de commande 22 dans la partie tubulaire arrière 30 du piston 20, de relier la chambre arrière 16 du servomoteur à la chambre avant 14 ou à l'atmosphère environnante.

La partie avant du plongeur 32 comporte un passage axial 40 dans lequel est guidé en coulissement un palpeur 42 qui s'étend vers l'avant et qui traverse un orifice axial 44 d'une face radiale avant 46 du piston 20 pour venir au contact, en cas de freinage, avec un disque de réaction 48 en matériau sensiblement incompressible tel que du caoutchouc ou un élastomère par exemple, qui est monté dans une cuvette 50 de l'extrémité arrière de la tige de poussée 24.

L'extrémité arrière du palpeur 42 porte une goupille transversale 52 qui s'étend à travers des lumières oblongues 54 du plongeur 32 et 56 du piston 20 et qui définit une position de repos ou position extrême arrière du plongeur 32 et du palpeur 42 quand cette goupille 52 est en appui sur une butée arrière 58 solidaire du piston 20.

Dans l'autre sens, la goupille 52 définit une position extrême avant du palpeur 42 par rapport au piston 20 quand elle est amenée au contact de l'extrémité avant des lumières 56 du piston.

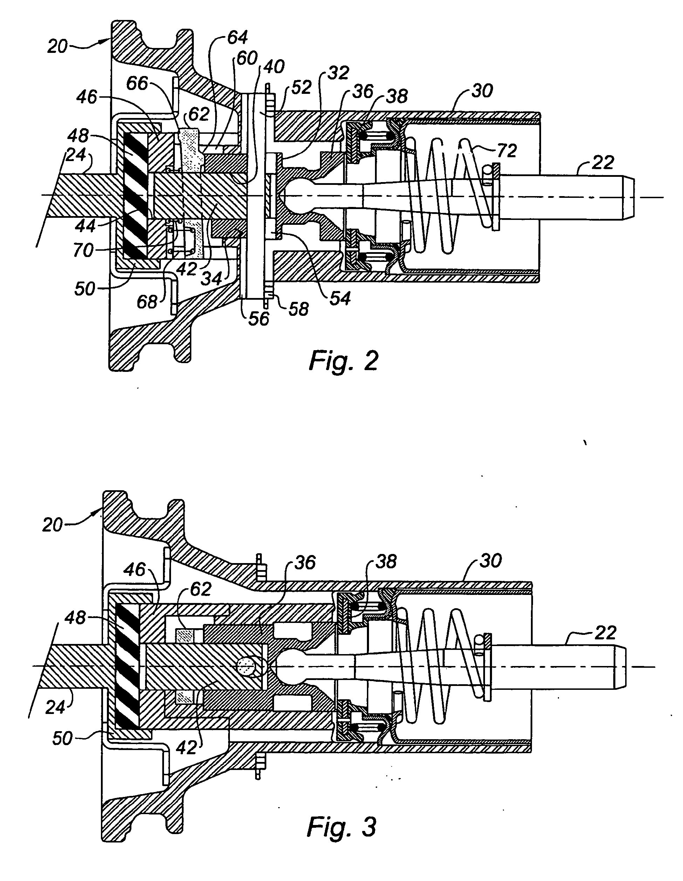

Des moyens d'immobilisation axiale du palpeur 42 par rapport au plongeur 32 sont prévus entre l'extrémité avant du plongeur 32 et la face radiale avant 46 du piston et sont disposés dans un logement transversal 60 du piston. Ces moyens comprennent un clé plate 62 comportant un orifice central traversé avec un jeu faible par le palpeur 42, une nervure arrière 64 d'appui en bascule sur la face avant du plongeur 32 et une nervure avant 66 d'appui en bascule sur la paroi avant du logement 60. Au moins un ressort de rappel 68 est monté dans le logement 60 entre la paroi avant de celui-ci et la clé 62 pour faire basculer celle-ci sur la nervure arrière 64 dans le sens contraire des aiguilles d'une montre aux figures 1 et 2. Dans l'exemple représenté, un autre ressort de rappel 70 est monté autour du palpeur 42 et sollicite en permanence la clé 62 en direction de l'extrémité avant du plongeur 32.

Quand la clé 62 est dans une position oblique comme représenté aux figures 1 et 2, elle bloque le coulissement vers l'avant du plongeur 32 sur le palpeur 42. Quand cette clé est sensiblement perpendiculaire à l'axe du servomoteur, elle peut être déplacée en translation sur le palpeur 42 et permet alors un déplacement vers l'avant du plongeur 32 par rapport au palpeur 42.

Lorsque les différents composants du servomoteur sont en position de repos comme représenté aux dessins, la face avant du palpeur 42 est écartée du disque de réaction 48 d'une distance qui correspond au saut représenté en S sur la courbe de la figure 4, qui est la courbe de variation de la pression de sortie Pmc du maître-cylindre en fonction de l'effort Fe appliqué à la pédale de frein.

De façon connue de l'homme du métier, cette courbe comprend une première phase a de rattrapage de course morte, une deuxième phase qui correspond au saut S, pour lequel la pression augmente en sortie du maître-cylindre sans que l'effort d'entrée Fe augmente, une troisième phase A d'assistance par le servomoteur et une quatrième phase b correspondant à la saturation du servomoteur.

Pendant la phase de saut S aucune réaction n'est appliquée par le disque de réaction 48 au plongeur 32 et à la tige de commande 22. A la fin de cette phase de saut, le palpeur 42 est au contact du disque de réaction 48 et transmet un retour d'effort au plongeur 32 et à la tige de commande 22.

Le servomoteur représenté aux figures 1 à 3 fonctionne de la façon suivante :

En freinage normal, la tige de commande 22 et le plongeur 32 sont déplacés vers l'avant à la même vitesse que le piston 20 et le palpeur 42 reste bloqué par rapport au plongeur 32 par la clé 62 occupant une position oblique comme représenté aux figures 1 et 2.

Dans ce cas, la courbe représentant la variation de la pression de sortie Pmc du maître-cylindre en fonction de l'effort d'entrée Fe est celle représentée en trait plein en figure 4.

Lors d'un freinage d'urgence, la tige de commande 22 et le plongeur 32 sont déplacés vers l'avant plus rapidement que le piston 20, de sorte que le plongeur 32 pousse la clé 62 vers l'avant. Quand celle-ci vient en butée par sa nervure avant 66 sur la face avant 46 du piston, elle bascule dans le sens des aiguilles d'une montre et prend une position sensiblement verticale par rapport à l'axe du servomoteur, ce qui permet au plongeur 32 de coulisser vers l'avant par rapport au palpeur 42. Il en résulte une réduction de la longueur totale de l'ensemble formé par le plongeur 32 et le palpeur 42. Si alors le conducteur relâche légèrement l'effort qu'il applique à la pédale de frein, la tige de commande 22 et le plongeur 32 sont ramenés légèrement en arrière par le ressort de rappel 72 de la tige de commande 22, la clé 62 bascule sur la nervure 64 en direction du plongeur 32 et reprend une position oblique de blocage axial du plongeur et du palpeur l'un par rapport à l'autre. La réduction de la longueur totale de l'ensemble plongeur-palpeur se traduit par une augmentation de la distance entre la face avant du palpeur et le disque de réaction 48.

Si alors le conducteur réapplique un effort important à la pédale de frein, la tige de commande 22 et le plongeur 32 sont redéplacés vers l'avant en entraînant le palpeur 42 bloqué par la clé 62 qui est en appui sur le plongeur. Cela correspond à une augmentation du saut qui passe de S à S' sur la courbe de la figure 4, et la pression Pmc de sortie du maître-cylindre varie en fonction de l'effort d'entrée Fe comme représenté par la courbe en pointillés. L'assistance fournie par le servomoteur, qui est plus importante dans ce cas que dans le cas précédent pour un même effort d'entrée, favorise donc un freinage d'urgence.

Lorsque le conducteur relâche l'effort qu'il applique sur la pédale de frein, le déplacement vers l'arrière de la tige de commande 22 et du plongeur 32 ramène la goupille 52 en appui sur la butée arrière 58 du piston et la goupille 52 ramène elle-même le palpeur 42 dans la position de repos représentée aux figures 1 à 3.

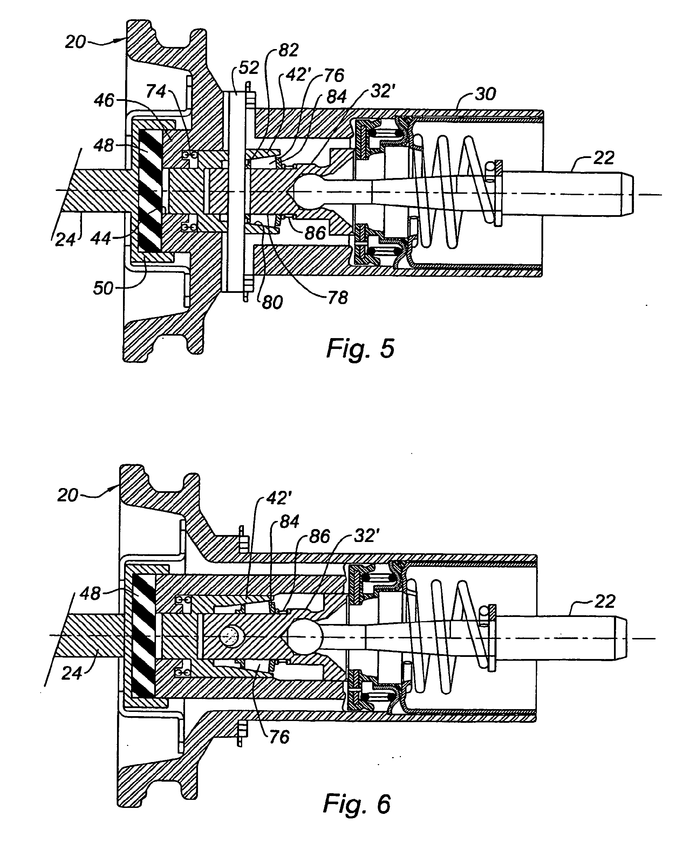

La variante de réalisation des figure 5 et 6 diffère de la réalisation des figures 1 à 3 essentiellement par les moyens d'immobilisation relative du plongeur et du palpeur.

Dans cette variante de réalisation, le plongeur 32' monté à l'extrémité avant de la tige de commande 22 est reçu et guidé dans un passage axial borgne du palpeur 42' dont une partie avant est guidée en translation axiale dans un passage cylindrique 44 de la face avant 46 du piston 20, de façon à pouvoir venir en appui sur le disque de réaction 48 monté dans la cuvette 50 à l'extrémité de la tige de poussée 24.

Un ressort de rappel 74 est monté entre la face avant 46 du piston et la face avant du palpeur 42' pour solliciter celui-ci en permanence vers l'arrière.

Une goupille transversale 52 est montée dans des lumières oblongues du plongeur 32', du palpeur 42' et du piston 20 pour définir une position de repos du plongeur 32' et du palpeur 42', représentée aux dessins.

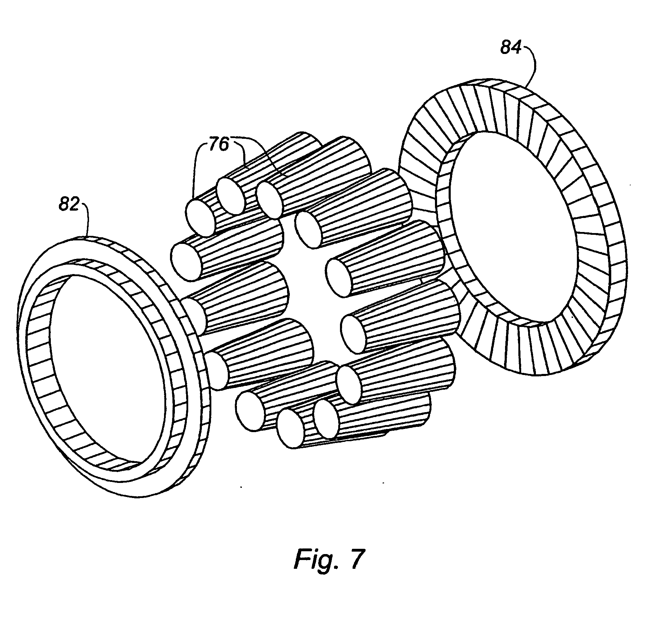

Les moyens d'immobilisation axiale relative du palpeur et du plongeur sont du type à rampe ou à coin et comprennent, comme on le voit mieux en figure 7, une série de rouleaux coniques 76 qui entourent le plongeur 32' et qui sont logés à l'intérieur de la partie arrière du palpeur 42', entre une surface cylindrique 78 à section circulaire du plongeur 32' et une surface tronconique interne 80 du palpeur 42'. Les rouleaux 76 sont orientés avec leur grande base vers l'arrière et leur petite base vers l'avant et sont maintenus axialement entre deux bagues 82 et 84 enfilées sur le plongeur 32'. L'ensemble est sollicité en permanence vers l'avant par un ressort de rappel 86 monté entre la bague arrière 84 et un épaulement de la surface cylindrique du plongeur 32'. La bague avant 82 est ainsi maintenue en appui sur la goupille transversale 52.

Cette variante de réalisation fonctionne de la façon suivante :

Lors d'un freinage normal, la tige de commande 22 et le plongeur 32' sont déplacés vers l'avant à la même vitesse que le piston 20 du servomoteur, et les positions représentées aux figures 5 et 6 sont conservées. La phase de saut S de la courbe de la figure 4 est déterminée par la distance qui sépare au repos la face avant du palpeur 42' du disque de réaction 48.

Lors d'un freinage d'urgence, la tige de commande 22 et le plongeur 32' sont déplacés vers l'avant plus vite que le piston 20 du servomoteur et entraînent avec eux le palpeur 42' jusqu'à ce que celui-ci vienne en butée sur la goupille 52 elle-même en appui sur le piston 20. Le plongeur 32' peut ainsi avancer plus ou moins par rapport au palpeur 42', en fonction de sa vitesse de déplacement, ce qui allonge plus ou moins la longueur totale de l'ensemble plongeur-palpeur. Si alors le conducteur relâche légèrement l'effort qu'il exerce sur la pédale de frein, le palpeur 42', le plongeur 32' et la tige de commande 22 se déplacent légèrement vers l'arrière, le palpeur 42' étant bloqué en position sur le plongeur 32 par les rouleaux coniques 76. Si ensuite le conducteur réapplique un effort important à la pédale de frein, la tige de commande 22, le plongeur 32' et le palpeur 42' sont déplacés vers l'avant. Durant cette phase, le saut S de la courbe de la figure 4 est augmenté en S' comme représenté sur la courbe en pointillés de la figure 4, ce qui correspond à une augmentation de l'assistance en freinage d'urgence, cette augmentation étant fonction de la vitesse de déplacement du plongeur et de la tige de commande pendant la phase initiale du freinage d'urgence.

## Revendications

1. Servomoteur d'assistance pneumatique au freinage, en particulier pour véhicule automobile, comprenant un piston axial (20) interposé entre une tige de poussée (24) et un plongeur (32, 32') monté à l'extrémité d'une tige de commande (22), et des moyens d'aide au freinage d'urgence comprenant un palpeur (42, 42') porté par le plongeur et déplaçable en coulissement axial par rapport à celui-ci et des moyens d'immobilisation axiale du palpeur (42, 42'), lesdits moyens d'immobilisation étant propres à bloquer le palpeur (42, 42') par rapport au plongeur (32, 32') au repos et lors d'un freinage quand la vitesse de déplacement de la tige de commande (22) et du plongeur (32, 32') est inférieure à une valeur limite, et à permettre le coulissement du plongeur (32, 32') par rapport au palpeur dans le sens de la réduction ou de l'allongement plus ou moins de la longueur axiale de l'ensemble plongeur-palpeur lors d'un freinage d'urgence quand la vitesse de déplacement de la tige de commande et du plongeur est supérieure à ladite valeur limite , le palpeur (42, 42') comportant des moyens (52) coopérant avec le piston (20) pour définir une position de repos du palpeur **caractérisé en ce que** les moyens précités définissent une position de repos du palpeur comprennent une goupille (52) montée dans un orifice transversal du palpeur.

2. Servomoteur selon la revendication 1, **caractérisé en ce que** les extrémités de la goupille (52) sont reçues dans des lumières oblongues (56) d'une partie cylindrique du piston (20), ces lumières délimitant un déplacement axial maximal du palpeur par rapport au piston.

3. Servomoteur selon la revendication 1 ou 2, **caractérisé en ce que** la goupille (52) traverse au moins une lumière oblongue (54) formée dans le plongeur (32, 32') et définissant une position de repos du plongeur par rapport au piston (20).

4. Servomoteur selon la revendication 3, **caractérisé en ce que** le palpeur (42) est reçu et guidé en coulissement dans un passage axial cylindrique (40) du plongeur (32).

5. Servomoteur selon l'une des revendications précédentes, **caractérisé en ce que** le plongeur (32) est guidé dans un passage cylindrique axial (34) du piston (20) comportant, du côté de la tige de poussée, une paroi radiale (46) formée avec un orifice axial (44) de passage du palpeur (42).

6. Servomoteur selon l'une des revendications précédentes, **caractérisé en ce que** les moyens d'immobilisation comprennent une clé basculante (62) montée dans un logement transversal (60) du piston (20) et comportant un orifice traversé avec jeu par le palpeur (42), et des moyens de rappel élastiques (70) sollicitant constamment la clé en appui sur le plongeur (32).

7. Servomoteur selon la revendication 6, **caractérisé en ce que** la clé (62) est déplaçable par le plongeur (32), lors d'un freinage d'urgence, entre une position de blocage du palpeur (42) et une position d'appui sur le piston (20) du servomoteur dans laquelle elle libère le palpeur et permet un coulissement du plongeur (32) sur le palpeur dans la direction de la tige de poussée (24).

8. Servomoteur selon l'une des revendications 1 à 3, **caractérisé en ce que** le plongeur (32') est reçu et guidé en coulissement dans un passage axial du palpeur (42') lui-même reçu et guidé dans un passage axial (44) du piston (20) du servomoteur.

9. Servomoteur selon la revendication 8, **caractérisé en ce que** les moyens d'immobilisation comprennent des moyens à rampe ou à coin montés entre une surface cylindrique (78) du plongeur (32') et une surface tronconique interne (81) du palpeur (42').

10. Servomoteur selon la revendication 8 ou 9, **caractérisé en ce que** les moyens d'immobilisation comprennent une pluralité de rouleaux coniques (76) répartis en couronne autour de la surface cylindrique (78) du plongeur (32') et retenus axialement par deux bagues (82, 84) enfilées sur le plongeur (32').

11. Servomoteur selon l'une des revendications 8 à 10, **caractérisé en ce que** les moyens d'immobilisation sont sollicités axialement en direction de la tige de poussée (24) par des moyens de rappel élastiques (86) prenant appui sur un épaulement du plongeur (32').

12. Servomoteur selon la revendication 11, **caractérisé en ce que** les moyens d'immobilisation sont appliqués par les moyens de rappel élastiques (86) sur la goupille (52) engagée dans des lumières transversales du plongeur (32'), du palpeur (42') et du piston (20).

13. Servomoteur selon la revendication 12, **caractérisé en ce que** la goupille (52) en appui sur une extrémité des lumières du piston (20) du côté de la tige de commande (22) définit une position de repos du plongeur (32') et du palpeur (42').

14. Servomoteur selon l'une des revendications 8 à 13, **caractérisé en ce que** le palpeur (42') est sollicité axialement par des moyens de rappel élastiques (74) dans une direction opposée à la tige de poussée (24).

## Claims

1. Pneumatic brake booster particularly for a motor vehicle comprising an axial piston (20) interposed between a push rod (24) and a plunger (32, 32') mounted at the end of a control rod (22), and emergency brake assist means comprising a feeler (42, 42') borne by the plunger and able to be moved in axial sliding with respect to the latter and means of axially immobilizing the feeler (42, 42') the said immobilizing means being able to block the feeler (42, 42') with respect to the plunger (32, 32') at rest and under braking when the rate of travel of the control rod (22) and of the plunger (32, 32') is below a limit value, and to allow the plunger (32, 32') to slide with respect to the feeler in the direction of reducing or increasing the axial length of the plunger-feeler assembly under emergency braking when the rate of travel of the control rod and of the feeler is above the said limit value, the feeler (42, 42') comprising means (52) collaborating with the piston (20) to define a position of rest of the feeler, **characterized in that** the aforementioned means defining a rest position for the feeler comprise a pin (52) mounted in a transverse orifice of the feeler.

2. Booster according to claim 1, **characterized in that** the ends of the pin (52) are housed in oblong slots (56) of a cylindrical part of the piston (20), these slots delimiting a maximum axial travel of the feeler with respect to the piston.

3. Booster according to claim 1 or 2, **characterized in that** the pin (52) passes through at least one oblong slot (54) formed in the plunger (32, 32') and defining a rest position of the plunger with respect to the piston (20).

4. Booster according to claim 3, **characterized in that** the feeler (42) is housed and guided in sliding in a cylindrical axial passage (40) of the plunger (32).

5. Booster according to one of the preceding claims, **characterized in that** the plunger (32) is guided in an axial cylindrical passage (34) of the piston (20) comprising, on the same side as the push rod, a radial wall (46) formed with an axial orifice (44) for the passage of the feeler (42).

6. Booster according to one of the preceding claims, **characterized in that** the immobilizing means comprise a pivoting key (62) mounted in a transverse housing (60) of the piston (20) and comprising an orifice through which the feeler (42) passes with clearance, and elastic return means (70) constantly urging the key to bear against the plunger (32).

7. Booster according to claim 6, **characterized in that** the key (62) can be moved by the plunger (32), under emergency braking, between a position of blocking the feeler (42) and a position of bearing on the piston (20) of the booster, in which position it relaxes the feeler and allows the plunger (32) to slide along the feeler in the direction of the push rod (24).

8. Booster according to one of claims 1 to 3, **characterized in that** the plunger (32') is housed and guided in sliding in an axial passage of the feeler (42'), itself housed and guided in an axial passage (44) of the booster piston (20).

9. Booster according to claim 8, **characterized in that** the immobilizing means comprise ramp or wedge means mounted between a cylindrical surface (78) of the plunger (32') and an internal frustoconical surface (81) of the feeler (42').

10. Booster according to claim 8 or 9, **characterized in that** the immobilizing means comprise a plurality of tapered rollers (76) distributed in a ring around the cylindrical surface (78) of the plunger (32') and held axially by two rings (82, 84) slipped over the plunger (32').

11. Booster according to one of claims 8 to 10, **characterized in that** the immobilizing means are urged axially toward the push rod (24) by elastic return means (86) bearing against a shoulder of the plunger (32').

12. Booster according to claim 11, **characterized in that** the immobilizing means are pressed by the elastic return means (86) onto a pin (52) engaged in transverse slots of the plunger (32'), of the feeler (42') and of the piston (20).

13. Booster according to claim 12, **characterized in that** the pin (52) bearing against one end of the slots of the piston (20) at the same end as the control rod (22), defines a position of rest of the plunger (32') and of the feeler (42').

14. Booster according to one of claims 8 to 13, **characterized in that** the feeler (42') is urged axially by elastic return means (74) in a direction away from the push rod (24).

## Patentansprüche

1. Pneumatischer Servomotor zur Bremsunterstützung, insbesondere für ein Kraftfahrzeug, mit einem axialen Kolben (20), der zwischen einer Schubstange (24) und einem am Ende einer Steuerstange (22) angebrachten Tauchkolben (32, 32') angeordnet ist, und mit Mitteln zur Unterstützung einer Schnellbremsung, die einen Taster (42, 42'), der am Tauchkolben vorgesehen ist und in Bezug auf diesen axial gleitend beweglich ist, und Mittel zur axialen Blockierung des Tasters (42, 42') umfassen, wobei die Blockierungsmittel dazu geeignet sind, in der Ruhestellung und bei einer Bremsung, wenn die Verlagerungsgeschwindigkeit der Steuerstange (22) und des Tauchkolbens (32, 32') unter einem Grenzwert liegt, den Taster (42, 42') in Bezug auf den Tauchkolben (32, 32') zu blockieren und bei einer Schnellbremsung, wenn die Verlagerungsgeschwindigkeit der Steuerstange und des Tauchkolbens über dem Grenzwert liegt, das Gleiten des Tauchkolbens (32, 32') in Bezug auf den Taster mehr oder weniger in Richtung der Verkürzung oder Verlängerung der axialen Länge der Tauchkolben-Taster-Baugruppe zu erlauben, wobei der Taster (42, 42') mit dem Kolben (20) zusammenwirkende Mittel (52) aufweist, um eine Ruhestellung des Tasters zu definieren, **dadurch gekennzeichnet, dass** die vorgenannten Mittel, die eine Ruhestellung des Tasters definieren, einen in einer Queröffnung des Tasters angebrachten Stift (52) aufweisen.

2. Servomotor nach Anspruch 1, **dadurch gekennzeichnet, dass** die Enden des Stifts (52) in Langlöcher (56) eines zylindrischen Abschnitts des Kolbens (20) aufgenommen sind, wobei diese Löcher eine maximale axiale Verlagerung des Tasters in Bezug auf den Kolben begrenzen.

3. Servomotor nach Anspruch 1 oder 2, **dadurch gekennzeichnet, dass** der Stift (52) mindestens ein Langloch (54) durchquert, das im Tauchkolben (32, 32') ausgebildet ist und eine Ruhestellung des Tauchkolbens in Bezug auf den Kolben (20) definiert.

4. Servomotor nach Anspruch 3, **dadurch gekennzeichnet, dass** der Taster (42) in einem zylindrischen axialen Durchgang (40) des Tauchkolbens (32) aufgenommen und gleitend geführt.

5. Servomotor nach einem der vorhergehenden Ansprüche, **dadurch gekennzeichnet, dass** der Tauchkolben (32) in einem zylindrischen axialen Durchgang (34) des Kolbens (20) geführt ist, der schubstangenseitig eine radiale Wand (46) aufweist, die mit einer axialen Öffnung (44) zum Durchführen des Tasters (42) ausgebildet ist.

6. Servomotor nach einem der vorhergehenden Ansprüche, **dadurch gekennzeichnet, dass** die Blockierungsmittel eine Kipptaste (62) aufweisen, die in einer Queraufnahme (60) des Kolbens (20) angebracht ist und eine Öffnung aufweist, die von dem Taster (42) mit Spiel durchquert wird, sowie elastische Rückstellmittel (70), die die Taste konstant in Anlage an den Tauchkolben (32) beaufschlagen.

7. Servomotor nach Anspruch 6, **dadurch gekennzeichnet, dass** die Taste (62) bei einer Schnellbremsung von dem Tauchkolben (32) zwischen einer Stellung zur Blockierung des Tasters (42) und einer Stellung zur Anlage am Kolben (20) des Servomotors bewegt werden kann, in welcher sie den Taster freigibt und ein Gleiten des Tauchkolbens (32) am Taster in Richtung der Schubstange (24) gestattet.

8. Servomotor nach einem der Ansprüche 1 bis 3, **dadurch gekennzeichnet, dass** der Tauchkolben (32') in einem axialen Durchgang des Tasters (42') aufgenommen und gleitend geführt ist, der selbst in einem axialen Durchgang (44) des Kolbens (20) des Servomotors aufgenommen und geführt ist.

9. Servomotor nach Anspruch 8, **dadurch gekennzeichnet, dass** die Blockierungsmittel Mittel mit einer Rampe oder einem Keil umfassen, die zwischen einer zylindrischen Fläche (78) des Tauchkolbens (32') und einer kegelstumpfartigen Innenfläche (81) des Tasters (42') angebracht sind.

10. Servomotor nach Anspruch 8 oder 9, **dadurch gekennzeichnet, dass** die Blockierungsmittel mehrere kegelförmige Rollen (76) umfassen, die kronenartig um die zylindrische Fläche (78) des Tauchkolbens (32') verteilt und axial durch zwei Ringe (82, 84) gehalten sind, die auf den Tauchkolben (32') aufgeschoben sind.

11. Servomotor nach einem der Ansprüche 8 bis 10, **dadurch gekennzeichnet, dass** die Blockierungsmittel durch elastische Rückstellmittel (86), die sich an einem Absatz des Tauchkolbens (32') abstützen, axial in Richtung der Schubstange (24) beaufschlagt werden.

12. Servomotor nach Anspruch 11, **dadurch gekennzeichnet, dass** die Blockierungsmittel durch die elastischen Rückstellmittel (86) in Anlage an den Stift (52) gebracht werden, der in Querlöcher des Tauchkolbens (32'), des Tasters (42') und des Kolbens (20) eingreift.

13. Servomotor nach Anspruch 12, **dadurch gekennzeichnet, dass** der Stift (52), der auf der Seite der Steuerstange (22) an einem Ende der Löcher des Kolbens (20) anliegt, eine Ruhestellung des Tauchkolbens (32') und des Tasters (42') definiert.

14. Servomotor nach einem der Ansprüche 8 bis 13, **dadurch gekennzeichnet, dass** der Taster (42') durch elastische Rückstellmittel (74) axial in eine zur Schubstange (24) entgegengesetzte Richtung beaufschlagt wird.
